# EUROPEAN PATENT SPECIFICATION

(11) **EP 3 254 805 B1**
(45) Date of publication and mention of the grant of the patent: **14.05.2025**
(21) Application number: 16746629.1
(22) Date of filing: 02.02.2016
(51) Int. Cl.: B24B 9/14, B24B 13/00

(54) **EYEGLASS LENS PROCESSING SYSTEM AND PROGRAM**
SYSTEM ZUM BEARBEITEN VON BRILLENGLÄSERN UND BRILLENGLASBEARBEITUNGSPROGRAMM
SYSTÈME DE TRAITEMENT DE VERRE DE LUNETTES ET PROGRAMME DE TRAITEMENT DE VERRE DE LUNETTES

(30) Priority: 04.02.2015 JP 2015019811; 04.02.2015 JP 2015019813; 04.02.2015 JP 2015019812
(43) Date of publication of application: 13.12.2017
(73) Proprietor: Nidek Co., Ltd., Aichi 443-0038 (JP)
(72) Inventor: TAKEICHI, Kyoji, Gamagori-shi Aichi 443-0038 (JP); KOIKE, Shinji, Gamagori-shi Aichi 443-0038 (JP)
(74) Representative: Hoefer & Partner Patentanwälte mbB
(86) International application number: PCT/JP2016/053075
(87) International publication number: WO 2016/125798

(56) References cited:
- EP-A1- 1 681 136
- EP-A1- 2 789 424
- EP-A2- 0 865 871
- EP-B1- 1 905 544
- WO-A1-2013/085010
- JP-A- 2002 174 800
- JP-A- 2002 174 800
- JP-A- 2003 084 817
- JP-A- 2007 301 695
- JP-A- 2013 125 083
- JP-A- 2014 091 202
- JP-A- 2014 091 202
- US-A1- 2003 017 794
- US-A1- 2014 199 918

## Description

### Technical Field

The present disclosure relates to an eyeglass lens processing system and program.

### Background Art

There is known an eyeglass lens processing system that processes an eyeglass lens by using an eyeglass frame shape measuring device (tracer) for acquiring a target lens shape data of an eyeglass frame, an eyeglass lens measuring device (lens meter) for measuring an optical center and the like of an eyeglass lens, a cup attaching device (blocker) for attaching a cup (jig) to an eyeglass lens, and an eyeglass lens processing device (lens edger) for processing an eyeglass lens and the like. In such an eyeglass lens processing system, a peripheral edge of a raw lens is processed on the basis of the target lens shape data of the eyeglass frame, and then, the processed lens is fitted in the eyeglass frame, thereby producing eyeglasses.

Further, the target lens shape data of the eyeglass frame acquired by the eyeglass frame shape measuring device and the like is stored in memories and the like of the eyeglass frame shape measuring device, the eyeglass lens processing device, and other terminals, for example.

For example, eyeglass lens processing systems are known form Patent Document 1, Patent Document 2, Patent Document 3, and Patent Document 4.

### Citation List

April 30, 2021

### Patent Document

Patent Document 1: Japanese Patent Laid-Open Publication No. 2008-137106
Patent Document 2: JP 2014 091202 A
Patent Document 3: US 2003/0017794 A1
Patent Document 4: EP 1681 136 A1.

### Summary of Invention

As a first problem, a conventional eyeglass lens processing system individually requires an eyeglass frame shape measuring device, and an eyeglass frame should be measured every time eyeglasses are produced, which is a troublesome.

As a second problem, a user discriminates a target lens shape data by a file name, and hence, it is very difficult to search for a desired target lens shape data from a plurality of target lens shape data stored in a memory.

As a third problem, an operator discriminates a target lens shape data based on a file name and uses it for processing an eyeglass lens. However, it is difficult to image the shape of the eyeglass frame with the file name, and thus, there is a possibility that the target lens shape data is erroneously selected.

The present disclosure has been made in view of the above problems, and a technical object thereof is to provide an eyeglass lens processing system and program which solve at least one problem of the prior art.

These problems are solved by the features of the independent claims. The dependent claims contain advantageous embodiment of the present invention.

### Brief Description of Drawings

FIG. 1 is a schematic view of an eyeglass processing system of the present embodiment.
FIG. 2A is a view showing an example of an image relating to an eyeglass frame.
FIG. 2B is a view showing an example of an image relating to an eyeglass frame.
FIG. 3 is a view for explaining tags of an image file.
FIG. 4 is an example of an operation screen of an application.
FIG. 5A is a view for explaining a reference screen.
FIG. 5B is a view for explaining a reference screen.
FIG. 6 is a view for explaining the sharing of a target lens shape data.
FIG. 7 is a flow chart for explaining a control operation of the present embodiment.
FIG. 8 is an external view showing a case where a photographing unit is provided in an edger.

### Embodiment for carrying out Invention

For a better understanding of the invention, an eyeglass lens processing apparatus not covered by the scope of the claims will be briefly described with reference to the drawings. The eyeglass lens processing apparatus (e.g., a terminal device 10 and a shared server 30) may be used, for example, when processing an eyeglass lens. The eyeglass lens processing apparatus mainly includes, for example, a lens shape acquisition unit (e.g., a control unit 13 and a control unit 31), an image acquisition unit (e.g., the terminal device 10), and an information processing unit (e.g., the control unit 13 and the control unit 31).

The lens shape acquisition unit acquires, for example, a target lens shape data of an eyeglass frame. The lens shape acquisition unit may include, for example, a measuring unit and may measure the target lens shape data by the measuring unit or may read the target lens shape data from an external lens shape measuring device.

As a method for measuring a target lens shape data, there is, for example, a method of measuring a target lens shape data by causing a stylus to trace along a rim of an eyeglass frame. Further, for example, a lens shape may be specified by photographing a demo lens and the like, and the target lens shape data specified may be read out from the target lens shape data stored in a storage unit. Further, a design data and the like may be used as the target lens shape data.

The image acquisition unit acquires, for example, an image data relating to an eyeglass frame. The image data relating to the eyeglass frame may be, for example, an image data representing the shape of at least a part of the eyeglass frame. The image data relating to the eyeglass frame may be, for example, a graphic that is created on the basis of a picture of the eyeglass frame, a graphic of the eyeglass frame, and a target lens shape data of the eyeglass frame. The image data relating to the eyeglass frame may be a two-dimensional image data or a three-dimensional image data. The image data relating to the eyeglass frame may be a still image or a moving image. For example, in the case of a moving image, the image data relating to the eyeglass frame may be a moving image obtained by photographing the eyeglass frame or a moving image obtained by photographing a state of processing the eyeglass lens using the target lens shape data of the eyeglass frame. Furthermore, the image data relating to the eyeglass frame may be a moving image having a sound that describes features of the eyeglass frame and an eyeglass lens processing method and the like.

In the information processing unit, for example, the target lens shape data acquired by the lens shape acquisition unit may be stored in the image data acquired by the image acquisition unit, and the image data with the target lens shape data, which is the image data containing the target lens shape data, may be stored in a storage unit (e.g., a memory 21 and a memory 32, etc.). In the information processing unit, for example, the target lens shape data may be stored in an information area defined in the image data. For example, the target lens shape data may be stored in a tag defined in the image data or may be stored in an information area identified by the sequence recorded in the image data.

Meanwhile, the information processing unit may extract the target lens shape data from the image data with the target lens shape data, which is stored in the storage unit. Then, the information processing unit may transmit the extracted target lens shape data to the eyeglass lens processing device. Here, the eyeglass lens processing device may be, for example, a device for processing the periphery of the eyeglass lens. For example, the information processing unit may extract the target lens shape data from the image data with the target lens shape data and restore the target lens shape data into a file format readable by the eyeglass lens processing device.

Meanwhile, the eyeglass lens processing apparatus may further include a display control unit (e.g., the control unit 13, etc.) and a selection instruction receiving unit (e.g., the control unit 13 and an operation unit 12, etc.). In the display control unit, for example, the image data with the target lens shape data, which is stored in the storage unit, may be displayed on a display unit (e.g., a display unit 11). For example, the selection instruction receiving unit may receive selection instruction in which the image data with at least one target lens shape data is selected from the image data with the target lens shape data, which is displayed on the display unit by the display control unit.

In this case, the information processing unit may extract the target lens shape data from the image data with the target lens shape data, which is selected in the selection instruction received by the selection instruction receiving unit.

Meanwhile, the eyeglass lens processing apparatus may further include a processing condition acquisition unit (e.g., the control unit 13, etc.). For example, the processing condition acquisition unit may acquire processing conditions when processing the eyeglass lens using the target lens shape data. In this case, the information processing unit may store the processing conditions acquired by the processing condition acquisition unit in the image data. In this way, a user can confirm the processing conditions suitable for the eyeglass frame by confirming the image data.

Meanwhile, the eyeglass lens processing apparatus may further include an evaluation information acquisition unit (e.g., the control unit 13 and the operation unit 12, etc.). The evaluation information acquisition unit may acquire evaluation information from a user for the target lens shape data, for example. In this case, the information processing unit may store the evaluation information of the target lens shape data acquired by the evaluation information acquisition unit in the image data. In this way, the user can select a suitable lens shape by looking at the evaluation.

Meanwhile, the eyeglass lens processing apparatus may function as an eyeglass lens processing system by the eyeglass frame shape measuring device (e.g., a tracer 4) and the eyeglass lens processing device (e.g., a lens edger 5). For example, the eyeglass frame shape measuring device measures the lens shape of the eyeglass frame and acquires the target lens shape data of the eyeglass frame. For example, the eyeglass lens processing device may process the periphery edge of the eyeglass lens. The eyeglass lens processing system may include, for example, the image acquisition unit and the information processing unit as described above. The image acquisition unit may acquire the target lens shape data relating to the eyeglass frame, for example. For example, the information processing unit may store the target lens shape data acquired by the eyeglass frame shape measuring device in the image data acquired by an image processing unit. Then, in the information processing unit, the image data with the target lens shape data, which is the image data containing the target lens shape data, may be stored in the storage unit. Furthermore, the information processing unit may extract the target lens shape data from the image data with the target lens shape data, which is stored in the storage unit, and then may transmit the extracted target lens shape data to the eyeglass lens processing device.

Meanwhile, a terminal device (e.g., the terminal device 10) may be used as the eyeglass lens processing apparatus. For example, the terminal device may mainly include the storage unit (e.g., the memory 21), the information processing unit (e.g., the control unit 13), the display control unit (e.g., control unit 13), and a transfer unit (e.g., the control unit 13). The storage unit stores, for example, the target lens shape data of the eyeglass frame. In the information processing unit, for example, the target lens shape data and the image data may be stored in the storage unit in association with each other from a data server (e.g., a data-sharing server 30) that stores the target lens shape data of the eyeglass frame and the image data relating to the eyeglass frame. In the display control unit, for example, the image data stored in the storage unit by the information processing unit may be displayed on the display unit. For example, the transfer unit may transfer the target lens shape data associated with the image data displayed on the display unit to the eyeglass lens processing device.

Meanwhile, the eyeglass lens processing apparatus may be a data server or may be a terminal device. For example, the data server may store the target lens shape data in the image data of the eyeglass frame, or the terminal device may store the target lens shape data in the image data.

Meanwhile, the eyeglass lens processing apparatus (e.g., the terminal device, the eyeglass lens processing device, the eyeglass frame shape measuring device, a cup attaching device, and the eyeglass lens measuring device) may extract the target lens shape data from the image data with the target lens shape data. For example, the eyeglass lens processing device may extract the target lens shape data from the image data with the target lens shape data. Then, the eyeglass lens processing device may process the eyeglass lens based on the extracted target lens shape data.

Meanwhile, the terminal device or the data server may be integral with the eyeglass lens processing device or the eyeglass frame shape measuring device or the like. For example, the eyeglass lens processing device and the eyeglass frame shape measuring device or the like may function as the eyeglass lens processing apparatus.

Hereinafter, an eyeglass lens processing system according to an embodiment will be briefly described with reference to the drawings. The eyeglass lens processing system (e.g., an eyeglass lens processing system 1) of the present embodiment is used when processing an eyeglass lens. The eyeglass lens processing system mainly includes the data-sharing server (e.g., the shared server 30) and a plurality of terminal devices (e.g., the terminal devices 10). The data-sharing server includes the storage unit (e.g., the memory 32) for storing the target lens shape data. The terminal devices transfer the target lens shape data to the data-sharing server.

The data-sharing server is adapted to receive the target lens shape data from one of the plurality of terminal devices via a communication network and is adapted to transfer the received target lens shape data to another terminal device. In this way, the eyeglass lens processing system shares the target lens shape data among a plurality of terminal devices.

Meanwhile, the data-sharing server may periodically communicate with the plurality of terminal devices. Then, the data-sharing server may receive new target lens shape data from one of the plurality of terminal devices via a communication network, compare the received new target lens shape data with the target lens shape data already stored in the storage unit, update the target lens shape data of its own according to the comparison result, and transfer the updated target lens shape data via a communication network to another terminal device. In this way, the data-sharing server may synchronize the target lens shape data among the plurality of terminal devices.

Meanwhile, the plurality of terminal devices may further include an information acquisition unit (e.g., the control unit 13). For example, the information acquisition unit may acquire evaluation information that evaluates the fitting when the eyeglass lens processed by using the target lens shape data is fitted in the eyeglass frame. In this case, the data-sharing server may share the evaluation information among the plurality of terminal devices by receiving the evaluation information acquired by the information acquisition unit and transferring the received evaluation information to another terminal device, as described above.

Meanwhile, for example, the information acquisition unit may acquire processing conditions when processing the eyeglass lens by using the target lens shape data. In this case, the data-sharing server may share the processing conditions among the plurality of terminal devices by receiving the processing conditions acquired by the information acquisition unit and transferring the received processing conditions to another terminal device, as described above.

Meanwhile, for example, the information acquisition unit may acquire classification information classified by at least one of the color and shape of the eyeglass frame. In this case, the data-sharing server may share the classification information among the plurality of terminal devices by receiving the classification information acquired by the information acquisition unit and transferring the received classification information to another terminal device, as described above.

Meanwhile, each of the terminal devices may include, for example, a transmitting unit (e.g., the control unit 13) and a receiving unit (e.g., the control unit 13). For example, the transmitting unit may transmit the target lens shape data to the data-sharing server. For example, the receiving unit may receive the target lens shape data from the data-sharing server.

For example, each of the terminal devices may be configured such that its receiving unit receives, from the data-sharing server, the target lens shape data transmitted to the data-sharing server via the transmitting unit by another terminal device. In this way, each of the terminal devices may share the target lens shape data with another terminal device.

Meanwhile, for example, each of the terminal devices may be configured such that its receiving unit receives the target lens shape data stored in the storage unit of another terminal device and each of the terminal devices may function as the data-sharing server.

Meanwhile, the plurality of terminal devices may be connected to the data-sharing server via one terminal device. In this way, the target lens shape data stored in the data-sharing server may be shared among the plurality of terminal devices via one terminal device.

For a better understanding of the invention, an eyeglass lens processing apparatus not covered by the scope of the claims will be briefly described with reference to the drawings. The eyeglass lens processing apparatus (e.g., an eyeglass lens processing device and an eyeglass frame shape measuring device) is used when processing an eyeglass lens. The eyeglass lens processing apparatus mainly includes, for example, an imaging optical system (e.g., an imaging optical system 61), a lens shape acquisition unit (e.g., a control unit 501), and an information processing unit (e.g., the control unit 501). For example, the imaging optical system photographs an eyeglass frame. For example, the lens shape acquisition unit acquires a target lens shape data of the eyeglass frame. For example, the information processing unit may store the image data of the eyeglass frame photographed by the imaging optical system and the target lens shape data acquired by the lens shape acquisition unit in association with each other in the storage unit. In this way, a user can confirm the shape of the target lens shape data by the associated image data.

Meanwhile, the eyeglass lens processing apparatus may further include a placement part (e.g., a placement table 62 and a support part 63). For example, an eyeglass frame may be placed on the placement part. In this case, the imaging optical system may photograph the eyeglass frame placed on the placement part.

Meanwhile, the imaging optical system may photograph the eyeglass frame from a position higher than a plane including left and right temples of the eyeglass frame placed on the placement part. In this way, the imaging optical system can photograph not only the lens shape of the eyeglass frame but also the shape of the temples or the like.

Meanwhile, for example, the imaging optical system may have an imaging optical axis that is inclined to either the left or the right with respect to a plane including a left-right symmetry axis of the eyeglass frame placed on the placement part.

Meanwhile, an eyeglass producing apparatus may further include a background member (e.g., a background member 64). For example, the background member may be disposed on the rear side of the eyeglass frame placed on the placement part with respect to the imaging optical system and form, as a background of a subject, a background color for increasing the contrast with the eyeglass frame.

Meanwhile, the eyeglass lens processing apparatus may further include a number registration unit (e.g., the control unit 501). For example, the number registration unit may register a work number set for each eyeglass in the image data of the eyeglass frame photographed by the imaging optical system. In this case, the information processing unit may store the image data in which the work number is registered by the number registration unit and the target lens shape data in which the same work number as the work number registered in the image data by the number registration unit is registered, among the target lens shape data acquired by the lens shape acquisition unit, in association with each other in the storage unit. In this way, it is possible to prevent a discrepancy between the image data and the target lens shape data.

For example, the eyeglass lens processing apparatus may be an eye position measuring device for measuring an eye position of a subject. In this case, the imaging optical system may be also used as a measuring optical system for photographing the subject in order to measure the eye position.

Further, the eyeglass lens processing apparatus may be an eyeglass frame shape measuring device which has a stylus and measures a lens shape of the eyeglass frame by the stylus.

Further, the eyeglass lens processing apparatus may be a cup attaching device which has a lens placement table for placing the eyeglass lens and an arm for attaching a cup to the eyeglass lens placed on the lens placement table.

Further, the eyeglass lens processing apparatus may be an eyeglass lens processing device which has a lens processing unit and processes a peripheral edge of the eyeglass lens by the lens processing unit.

### <Example>

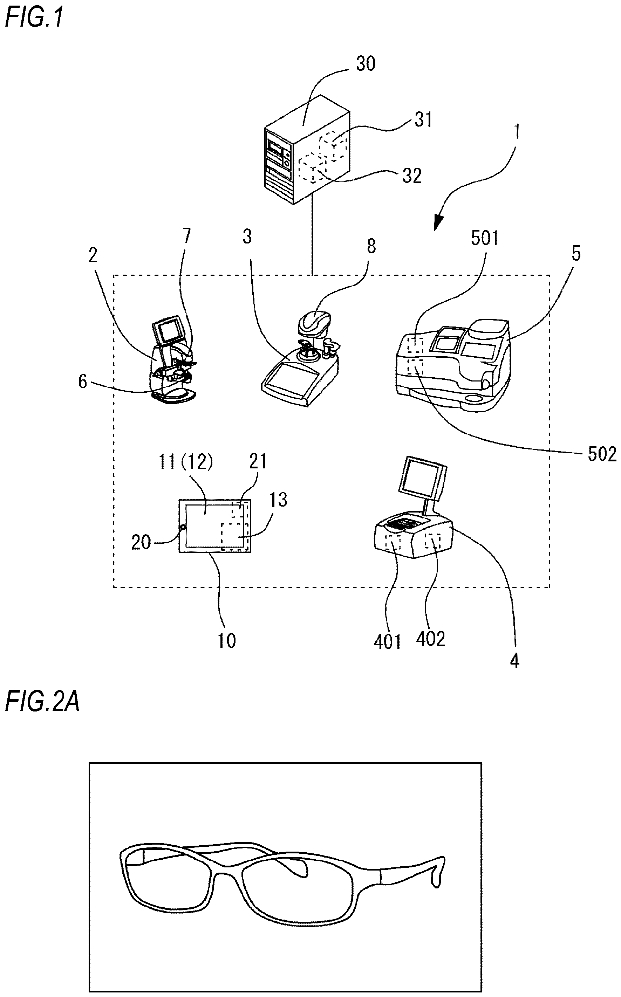

Hereinafter, an example of an eyeglass lens processing system according to the present disclosure will be described. An eyeglass lens processing system 1 shown in FIG. 1 mainly includes a lens meter 2, a blocker 3, a tracer 4, a lens edger 5, and an information processing terminal (hereinafter, also simply referred to as a terminal) 10. Further, the eyeglass lens processing system 1 may include a shared server 30. The shared server 30 may include, for example, a control unit 31, a memory 32 and the like. For example, the lens meter 2, the blocker 3, the tracer 4, the lens edger 5, the terminal 10, and the shared server 30 may be connected to each other via a communication network. The communication network may be, for example, wired or wireless.

The lens meter 2 is, for example, a device for measuring an optical center or the like of an eyeglass lens. For example, the lens meter 2 includes a measuring optical system (e.g., Shack-Hartmann optical system or the like) 6 and measures an optical center of an eyeglass lens. Furthermore, the lens meter 2 may include a marking mechanism 7 and apply a marking point to the optical center measured by the measuring optical system 6.

The blocker 3 is a device for attaching a cup to an eyeglass lens. This cup is used as a jig for holding an eyeglass lens by the lens edger 5. For example, the blocker 3 attaches the cup to the eyeglass lens with reference to the marking point applied to the optical center of the eyeglass lens by the lens meter 2. The blocker 3 includes, for example, a camera 8. The blocker 3 may automatically detect the marking point to attach the cup or a user may attach the cup by matching the position of the marking point to the scale.

The tracer 4 is a device for measuring a lens shape of an eyeglass frame. For example, the tracer 4 includes a control unit 401 and a memory 402. For example, the tracer 4 may cause a stylus to trace (not shown) along a rim of the eyeglass frame and measure the lens shape of the eyeglass frame based on the trajectory of the stylus.

The lens edger (hereinafter, simply referred to as an edger) 5 is, for example, a device for processing a peripheral edge of the eyeglass lens into a lens shape of the eyeglass frame. The edger 5 may include, for example, a control unit 501, a memory 502 and the like. The edger 5 includes at least one lens processing means of a grinding stone and a cutter and processes the peripheral edge of the eyeglass lens based on the target lens shape data of the eyeglass frame acquired by the tracer 4.

### <Terminal Device>

The terminal 10 is used, for example, for a user to manage information for producing eyeglasses. The terminal 10 may include, for example, a display unit 11, an operation unit 12, a control unit 13, a built-in camera 20, a memory 21 and the like. The display unit 11 presents, for example, information for producing eyeglasses to a user. For example, the display unit 11 displays an image obtained by photographing an eyeglass frame, a graphic image of the eyeglass frame, a graphic image of the target lens shape data and the like. The operation unit 12 outputs, for example, an operation signal to the control unit 13 and the like of the terminal 10 based on the operation of a user. Meanwhile, a touch panel type display is used as the display unit 11 of the present embodiment, which is also used as the operation unit 12. Of course, the display unit 11 need not be a touch panel type. In this case, for example, the operation unit 12 may have various switches and receive a user's operation. The built-in camera 20 includes an imaging element (not shown) and is used for photographing an image and the like of an eyeglass frame.

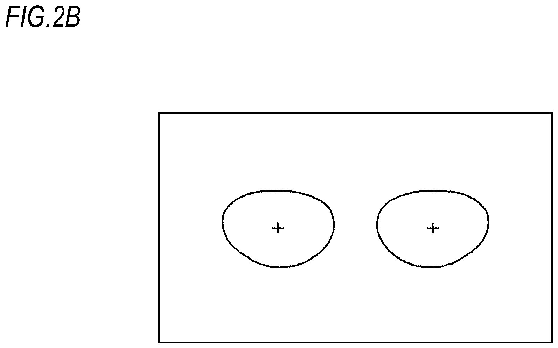

For example, an application for inserting the target lens shape data in the image data is installed in the terminal 10 of the present embodiment. For example, the control unit 13 executes the application and inserts the target lens shape data in the image data. As the image data containing the target lens shape data, for example, an image including information capable of recognizing the shape of an eyeglass frame, such as a picture of an eyeglass frame and a graphic created on the basis of a target lens shape data of an eyeglass frame, is used (see FIGS. 2A and 2B).

As a file format of an image data, for example, an Exif (Exchangeable Image File Format) standard and the like, in which image attribute information such as a main image, a thumbnail image and photographing information is recorded in a predetermined format, is known. For example, in the file of the Exif standard, the image attribute information is stored in a directory on the tree called IFD. A tag called MakerNote is defined in the area of ExifIFD which has the Exif standard and is one of the IFDs. Makers may record their own information in this MakerNote tag.

Generally, an information area relating to user information, such as the above-described MakerNote tag, may be defined in the image data. The tag relating to the user information as described above can be freely used by a user, and the format of data to be inserted in the tag is often free. For example, a tag called the MakerNote is defined in the case of JEPG, and a tag called a private chunk and the like is defined in the case of PNG. Similar tags are often defined in other image formats as well.

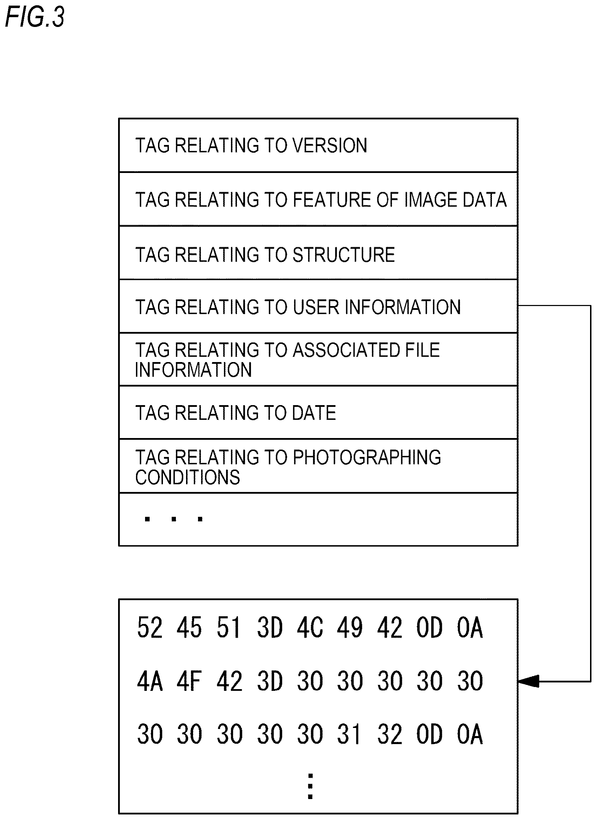

For example, the control unit 13 inserts the target lens shape data of the eyeglass frame in the information area such as the above tag. The target lens shape data is, for example, radius vector information with the frame center of the lens shape as the origin. As shown in FIG. 3, the control unit 13 inserts the target lens shape data in the tag defined in the image data. For example, the control unit 13 calls a desired tag by the tag number determined for each format of the image data and writes target lens shape data in the called tag. By doing so, the control unit 13 can create the image data containing the target lens shape data.

Furthermore, the control unit 13 can extract the target lens shape data inserted in the image data by executing an application. For example, the control unit 13 calls a tag containing the target lens shape data, and outputs the inserted target lens shape data in a file format that can be read by the edger 5.

### <Insertion and Extraction of Target lens shape data>

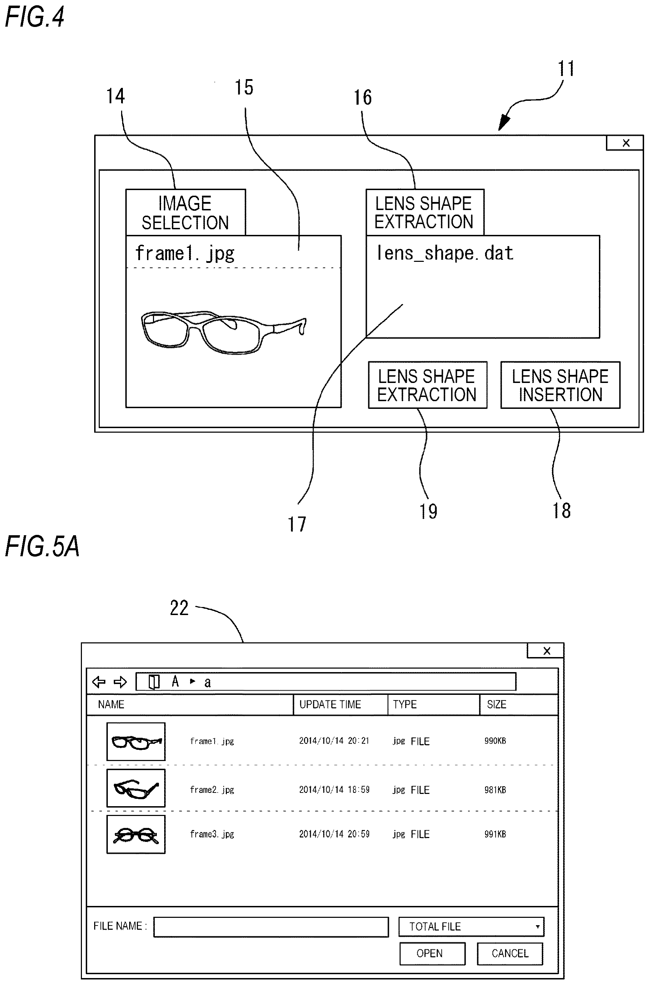

Hereinafter, an operation of an application when inserting and extracting the target lens shape data into and from the image data will be described. The control unit 13 executes at least one of the insertion and extraction of the target lens shape data into and from the image data based on the operation signal which is outputted from the operation unit 12 according to an operation of a user. First, the operation in the case of inserting the target lens shape data in the image data will be described. FIG. 4 shows an example of a screen displayed on the display unit 11 when the application is activated. On the display unit 11, for example, an image selection button 14, an image data field 15, a lens shape selection button 16, a target lens shape data field 17, a lens shape insertion button 18, a lens shape extraction button 19 and the like are displayed. The image selection button 14 is a button to be selected when selecting the image data for storing the target lens shape data. The image data field 15 is a field in which the file name of the selected image and images and the like are displayed. The lens shape selection button 16 is, for example, a button to be selected when selecting the target lens shape data to be inserted in the image data. The target lens shape data field 17 is a field in which the file name of the selected lens shape is displayed. The lens shape insertion button 18 inserts the selected target lens shape data in the selected image data. The lens shape extraction button 19 is a button to be selected when extracting the target lens shape data from the selected image data with the target lens shape data.

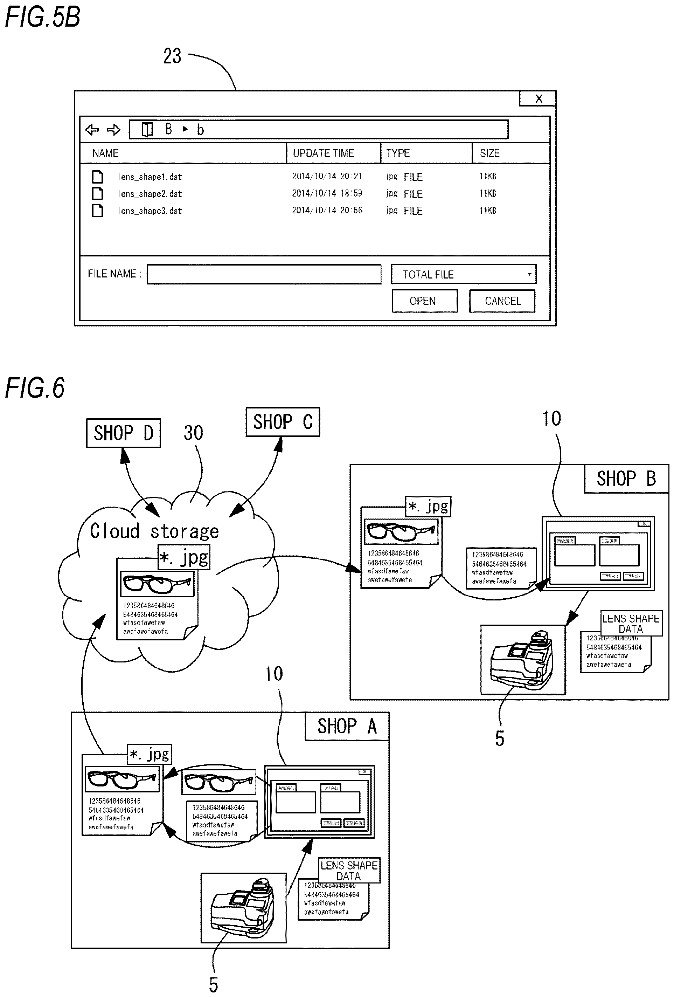

First, a user selects the image selection button 14 by the operation unit (here, the touch panel) 12. When the image selection button 14 is selected, the control unit 13 causes an image reference screen 22 to be displayed (see FIG. 5A). A user refers to, by the image reference screen 22, the storage location of the image data of the eyeglass frame photographed by, for example, the built-in camera 20 and the like of the terminal 10 and selects the stored image data of the eyeglass frame. When the image data of the eyeglass frame is selected, the control unit 13 displays the file name of the image data and the images and the like on the image data field 15 (see FIG. 4). Subsequently, a user selects the lens shape selection button 16 by the operation unit 12. When the lens shape selection button 16 is selected, the control unit 13 causes the lens shape reference screen 23 to be displayed (see FIG. 5B). A user refers to, by the lens shape reference screen 23, the storage location of the target lens shape data of the eyeglass frame acquired by, for example, the tracer 4 and the like and selects the stored target lens shape data of the eyeglass frame. When the target lens shape data of the eyeglass frame is selected, the control unit 13 displays the file name of the target lens shape data in the target lens shape data field 17. Meanwhile, the control unit 13 may display the graphic image of the selected target lens shape data on the display unit 11 in order to make a user confirm the shape of the target lens shape data.

When the image data and target lens shape data of the eyeglass frame are selected, a user selects the lens shape insertion button 18 by the operation unit 12. When the lens shape insertion button 18 is selected, the control unit 13 inserts the selected target lens shape data in the tag of the selected image data.

Next, an operation of extracting the target lens shape data from the image data will be described. For example, a user selects the image selection button 14 by the operation unit 12. When the image selection button 14 is selected, the control unit 13 causes the image reference screen 22 to be displayed. For example, a user refers to, by the image reference screen 22, the storage location of the image data with the target lens shape data, in which the target lens shape data is inserted, and selects the stored image data with the target lens shape data. At this time, a user may select the image data with reference to the thumbnail image. When the image data with the target lens shape data is selected, the control unit 13 displays the file name of the image data with the target lens shape data and the images and the like in the image data field 15. When the image data with the target lens shape data is selected, a user operates the lens shape extraction button 19 by the operation unit 12. When the lens shape extraction button 19 is operated, for example, the control unit 13 extracts the target lens shape data inserted in the tag of the selected image data with the target lens shape data and outputs the target lens shape data to a folder set as an output destination.

As described above, the control unit 13 can create the image data with the target lens shape data, in which the target lens shape data is inserted. In this way, the control unit 13 can manage the target lens shape data as the image data. When the target lens shape data is managed as in the prior art, a user determines the lens shape by the file name or the like to which the model number or the like of the lens shape is inputted. However, it is difficult to image the lens shape by the file name, and thus, it is difficult for a user to search for a desired target lens shape data.

Thus, by inserting the target lens shape data in the image data as in the present embodiment, the target lens shape data can be handled together with the image data. Therefore, even if a user cannot image the lens shape by the file name of the target lens shape data, it is possible to grasp the shape of the target lens shape data by confirming the image data. In this way, the control unit 13 can reduce a possibility that a user erroneously select the target lens shape data.

Meanwhile, as described above, depending on the format of the image data, a tag for inserting the reduced version (thumbnail) of the image data is prepared and the thumbnail image of the original image data is automatically inserted. In this case, a user can search the target lens shape data of the eyeglass frame to be produced while viewing the thumbnail image on the file list screen as shown in FIG. 5A, which saves the cumbersome work of opening the image data file.

Meanwhile, the control unit 13 may insert not only the target lens shape data but also other information in the image data. For example, the control unit 13 may insert the solid information (e.g., the maker, model and model number and the like of the tracer 4) of the tracer 4 used for acquiring the target lens shape data. For example, even when the same eyeglass frame is measured, the target lens shape data may be different depending on the maker and model and the like of the tracer 4. Therefore, when the information of the tracer 4 is inserted in the image, a user can select the target lens shape data of the desired eyeglass lens with reference to the maker and model and the like of the tracer 4.

Furthermore, the control unit 13 may insert the color information of the eyeglass frame in the image data. For example, even when the eyeglass frames have the same model number, the lens shape may be slightly different depending on the color of the eyeglass frames. When the target lens shape data is inserted in the image data in which the color of the eyeglass frame such as the monochrome picture of the eyeglass frame and the graphic of the lens shape is not reflected, it is not possible to know the color of the eyeglass frame. Therefore, the color information of the eyeglass frame may be inverted in the tag of the image data. Then, for example, the control unit 13 displays the color information when displaying the graphic image of the lens shape on the display unit 11. In this way, a user can select the target lens shape data after confirming the image data of the graphic of the lens shape and the color information inserted in the image data.

Meanwhile, the control unit 13 may insert the evaluation information of the target lens shape data in the tag of the image data. For example, based on the input of a user to the operation unit 12, the control unit 13 may insert the evaluation of the fitting when the eyeglass lens is fitted in the frame after the eyeglasses are produced in the tag of the image data. In this way, a user can select the target lens shape data with reference to the evaluation information inserted in the image data.

Meanwhile, the control unit 13 may insert the processing conditions in the tag. For example, even when the evaluation of the target lens shape data inserted in the image data is high as described above, there is a possibility that the finish is varied depending on whether or not it is processed under the same conditions as at the time of evaluation. In this case, since the processing conditions at the time of processing the eyeglass lens based on the evaluated target lens shape data are inserted in the image data, the eyeglass lens can be processed in the same finish as at the time of evaluation even in the case of processing the eyeglass lens using the same target lens shape data.

The processing conditions of the target lens shape data can include, for example, information on the lens used such as the curve, thickness and material and the like of the lens, information on the lens edger used such as the maker, model and model number and the like of the lens edger, and the processing method and processing operation of the eyeglass lens. Here, the processing operation is, for example, a relative operation between a lens chuck shaft clamping the eyeglass lens and a processing tool.

Meanwhile, the tag storing the target lens shape data need not be a maker note. For example, the control unit 13 may store the information on the target lens shape data as described above in the tag storing the photographing date of the image, the tag storing a comment, and the like.

Meanwhile, the tag storing the target lens shape data is not limited to the tag defined by the image format, but may be a tag added to an image by an application. For example, the control unit 13 may add the tag in the image data by executing the application. Then, the control unit 13 may add the image data to the tag added to the image data. The control unit 13 inserts the target lens shape data in the tag added to the image data. Furthermore, the control unit 13 may store the target lens shape data in the tag added to the image data.

Meanwhile, in some cases, the tags are not defined in the image data such as the image data in bitmap format, for example. In this case, a unique information area may be defined in the image data, and the target lens shape data may be stored in the information area. For example, the information area for storing the target lens shape data may be identified by the sequence to be recorded in the image data.

### <Control Operation of Overall System>

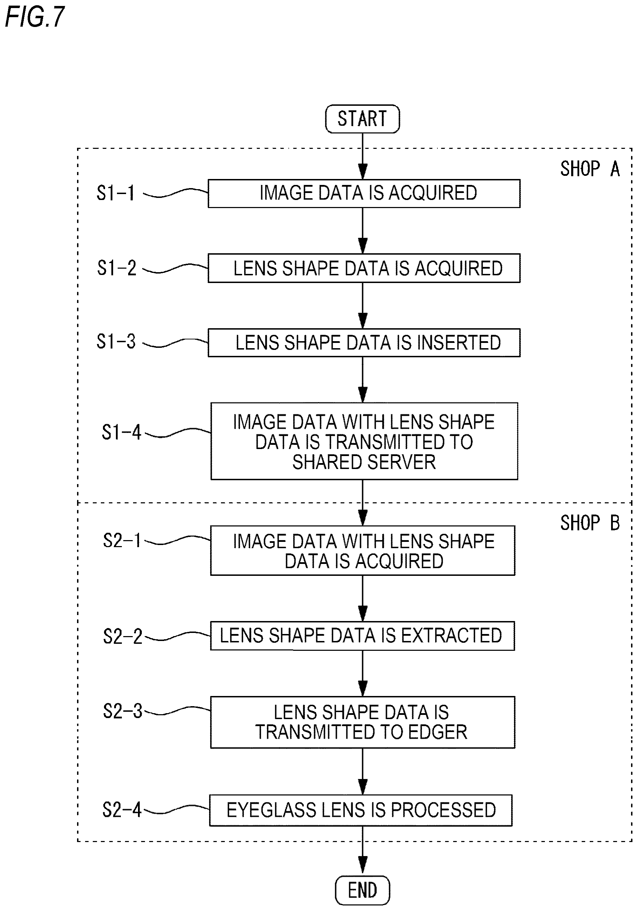

Hereinafter, as shown in FIG. 6, in the eyeglass lens processing systems of a plurality of eyeglass shops (e.g., shop A, shop B, etc.), a control operation at the time of processing the eyeglass lens while sharing the target lens shape data with another shop will be described with reference to the flowchart shown in FIG. 7. Here, in the example of FIG. 6, a case where the target lens shape data of the eyeglass frame traced at the shop A is shared and the eyeglass lens is processed at the shop B is shown.

First, at the shop A, the control unit 13 of the terminal 10 acquires the image data of the eyeglass frame (Step 1-1). For example, the control unit 13 may acquire the image of the eyeglass frame photographed by a user using the built-in camera 20 of the terminal 10. The control unit 13 may store the image of the eyeglass frame acquired by the built-in camera 20 in the memory 21.

Subsequently, the control unit 13 acquires the target lens shape data of the eyeglass frame (Step 1-2). For example, the control unit 13 may acquire the target lens shape data measured by a user tracing the eyeglass frame using the tracer 4. The control unit 401 of the tracer 4 traces the set eyeglass frame and stores the target lens shape data of the eyeglass frame in the memory 402. Furthermore, the control unit 401 transmits the traced target lens shape data to the edger 5. Upon receiving the target lens shape data, the control unit 501 of the edger 5 stores the target lens shape data in the memory 502.

For example, the terminal 10 may access the memory 402 of the tracer 4 by a wireless (or wired) communication means or the like and acquire the target lens shape data of the eyeglass frame. When the target lens shape data is acquired, as described above, a user selects the image data and the target lens shape data by using the application and presses the insertion button 19. The control unit 13 receives operation signal from the operation unit 12 and inserts the target lens shape data acquired from the tracer 4 in the selected image data of the eyeglass frame (Step 1-3).

The image data containing the target lens shape data (hereinafter, also referred to as the image data with the target lens shape data) is transmitted from the terminal 10 to the shared server (e.g., cloud server) 30 (Step 1-4), and is stored in the memory 32. The storage to the shared server 30 may be automatically performed by the control unit 13 or may be manually performed by a user. The terminal 10 is synchronized with the shared server 30. When the terminal 10 acquires the image data with the target lens shape data, the terminal 10 may automatically transmit the image data with the target lens shape data to the shared server 30. Further, the control unit 31 of the shared server may automatically acquire the image data with the target lens shape data from the terminal 10.

For example, a user obtains an optical center of a raw lens by the lens meter 2 and marks it with an ink pen or the like. Then, for example, a user uses the blocker 3 to attach a cup to a predetermined position with respect to the optical center marked by the lens meter 2. The cup is attached to the lens by, for example, a double-sided tape. The cup is used as a jig when processing the lens by the edger 5. A user sets the eyeglass lens, to which the cup is attached by the lens meter 2 and the blocker 3, to the edger 5. The edger 5 processes a peripheral edge of the set eyeglass lens based on the target lens shape data received from the tracer 4.

A user puts the processed eyeglass lens to be fitted in the eyeglass frame. A user confirms the fitting when the eyeglass lens is fitted in the eyeglass frame. For example, when the fitting is good, a user may operate the terminal 10 to give a high evaluation value to the target lens shape data used this time. For example, a user may input the evaluation level of the target lens shape data according to the fitting in the information area of the image data with the target lens shape data. When the lens shape is evaluated by a user, the evaluation information may be synchronized with the shared server 30 and may be reflected in the target lens shape data on the shared server 30.

Subsequently, in the case of producing eyeglasses without using the tracer 4 at the shop B, a user accesses the shared server 30 by using the terminal 10 and acquires the image data with the target lens shape data (Step 2-1). For example, a user accesses the shared server 30 by using the terminal 10 and searches for the target lens shape data of the eyeglass frame of the eyeglasses to be produced. In this case, since the target lens shape data is inserted in the image data as described above, a user searches for a desired eyeglass frame while confirming the image data.

Meanwhile, when there is a plurality of target lens shape data of the same eyeglass frame, a user may select the target lens shape data based on the evaluation information of the target lens shape data. For example, a user may download the image data with the target lens shape data, in which the target lens shape data having the highest evaluation among the desired eyeglass frames is inserted. Further, the shared server 30 may present the number of downloads of each target lens shape data to a user. In this way, a user may acquire the target lens shape data which has a large number of downloads and is popular.

The control unit 13 extracts the target lens shape data from the acquired image data with the target lens shape data (Step 2-2) and transmits it to the edger 5 (Step 2-3). The edger 5 receives the target lens shape data and processes a peripheral edge of the set eyeglass lens (Step 2-4).

When the processing of the eyeglass lens by the edger 5 is completed, a user takes out the eyeglass lens from the edger 5 and puts it to be fitted in the eyeglass frame. A user may check the fitting at the time of framing the eyeglass lens in the eyeglass frame and record the evaluation value of the target lens shape data by the terminal 10. The evaluation value of the target lens shape data recorded by a user may be synchronized and shared by the control unit 31 of the shared server 30. Meanwhile, the shared server 30 may store the evaluation value inputted from each user. For example, the shared server 30 may calculate the average of the evaluation values from each user and store the average value as the evaluation information of the target lens shape data.

In this way, since the target lens shape data is acquired from the shared server 30 by using the terminal 10, the eyeglass lens can be processed without using the tracer 4. Further, since it is possible to share the data of the tracer 4 with another user, a plurality of target lens shape data can be acquired. Furthermore, since the target lens shape data uploaded to the shared server 30 can be evaluated, better target lens shape data can be acquired by comparing the evaluation even when there is a plurality of target lens shape data.

Meanwhile, for example, the shared server 30 and the like that totally controls the shared data may classify and manage the shared image data with the target lens shape data. For example, the image data with the target lens shape data may be managed by classifying the store of the eyeglass shop, and the maker, color and shape (2 points, rimless, etc.) and the like of the eyeglass frame. For example, the control unit 31 of the shared server 30 or the like may read and classify the information such as the store, maker, color, and the shape and the like recorded in the image data with the target lens shape data. In this way, since the image data with the target lens shape data is classified and managed, it is easy for a user to search for a desired image data with the target lens shape data.

Meanwhile, in the above description, the image data of the eyeglass frame is photographed by the built-in camera 20 of the terminal 10 or the like. However, the present invention is not limited thereto. For example, the photographing unit for photographing the eyeglass frame may be provided in equipment used for producing eyeglasses, such as an eye position meter, the tracer 4, the blocker 3, the edger 5, the lens meter 2, refractometer or the like, thereby acquiring the image data of the eyeglass frame. The eye position meter is, for example, a device which photographs a subject wearing the eyeglasses and measures eyeglass wearing parameters (pupillary distance, frame pupillary distance (frame PD), eye point height, far PD, near PD) for producing the eyeglasses.

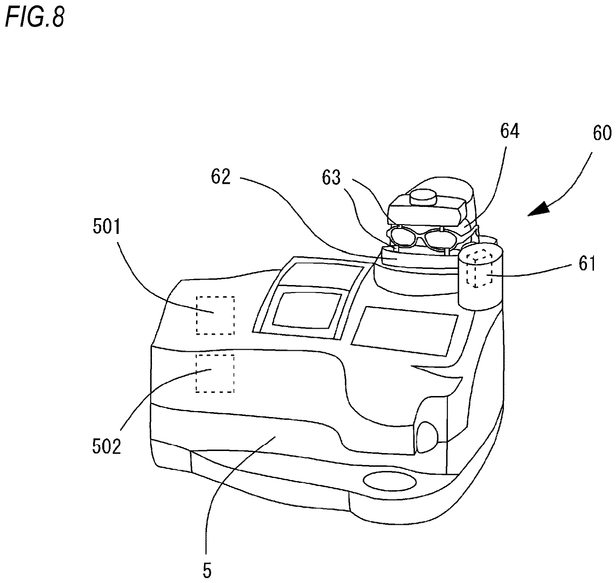

For example, FIG. 8 shows an example where the photographing unit 60 is provided in the edger 5. The photographing unit 60 may include, for example, an imaging optical system 61 for photographing the eyeglass frame from a predetermined direction.

Furthermore, the photographing unit 60 may include a placement table 62 for placing the eyeglass frame. The placement table 62 may include, for example, a support part 63 for supporting the eyeglass frame in a predetermined direction with respect to an imaging optical axis of an imaging optical system. For example, the photographing unit may photograph the eyeglass frame supported by the support part 63 of the placement table 62 from a predetermined direction. For example, the photographing unit 60 may photograph the eyeglass frame from, for example, a direction in which the shape of the eyeglass frame is easily seen. The direction in which the shape of the eyeglass frame is easily seen may be, for example, a direction that is inclined to either the left or the right with respect to a plane including a left-right symmetry axis of the eyeglass frame or a direction that is inclined upward with respect to a plane including left and right temples of the eyeglass frame. In this way, it is possible to photograph an image in which not only the lens shape of the eyeglass frame but also the shape including the temples is easily confirmed.

Furthermore, the photographing unit 60 may include the background member 64 serving as a background when photographing the eyeglass frame. The background member 64 may form a background color having high contrast with the eyeglass frame so that the color of the eyeglass frame can be easily recognized. For example, the background member may be formed in white.

By using such a photographing unit 60, it is possible to photograph an image which makes it easy to recognize the shape and color and the like of the eyeglass frame. Furthermore, it is possible to make the image of the eyeglass frame united, and thus, it is easy to compare a plurality of eyeglass frames.

Meanwhile, the imaging optical system 61 of the photographing unit 60 may be also used as an optical system provided for other purposes. For example, in the eye position meter or the refractometer or the like, the measuring optical system for photographing a face of a subject or an anterior eye part of a subject may be also used as the imaging optical system 61 of the photographing unit 60. Further, for example, in the lens meter or the blocker, the measuring optical system for measuring the eyeglass lens may be also used as the imaging optical system 61 of the photographing unit 60.

Meanwhile, when inserting the target lens shape data in the image data, the target lens shape data and the image data, which have the same work number set for each eyeglass, may be combined with each other. In this case, for example, the work number is determined at the start of the eyeglasses producing work for any wearer. Then, the target lens shape data corresponding to the work number can be obtained by at least one of the frame tracing and the reading of registered pattern data. Further, the image data associated with the work number is obtained by inputting the work number when photographing the eyeglass frame with the photographing unit 61 mounted on the eyeglass manufacturing equipment. At least one of the shared server 30 and individual devices and the like combines the target lens shape data and the image data associated with each other by the work number and stores it in a specific place. Furthermore, at least one of the shared server 30 and individual devices and the like may upload the stored file as the shared data to the shared server 30.

In this way, since the target lens shape data and the image data containing the target lens shape data are automatically associated with each other, it is possible to omit a user's work of selecting and combining the target lens shape data and the image data. Further, it is possible to reduce the mistake of inserting the target lens shape data in the image data of another eyeglass frame.

Meanwhile, in the above description, the target lens shape data of the eyeglass frame is inserted in the image data. However, the present disclosure is not limited thereto. For example, hole position data may be inserted in the image data. The hole position data is, for example, hole position information when drilling the eyeglass lens.

### Reference Numerals List

- 1: Eyeglass Lens Processing System
- 2: Lens Meter
- 3: Blocker
- 4: Tracer
- 5: Lens Edger
- 10: Terminal Device
- 11: Display Unit
- 12: Operation Unit
- 13: Control Unit
- 21: Memory
- 30: Shared Server
- 31: Control Unit
- 32: Memory
- 60: Photographing Unit
- 61: Imaging Optical System

## Claims

1. An eyeglass lens processing system (1) for sharing a target lens shape data of an eyeglass frame, the system comprising:
a data-sharing server (30) including storage unit (32) for storing the target lens shape data; and
a plurality of terminal devices (10) for transferring the target lens shape data to the data-sharing server (30),
**characterized in that** the data-sharing server (30) is adapted to receive the target lens shape data from one of the plurality of terminal devices (10) via a communication network and is adapted to transfer the received target lens shape data to another terminal device (10) to update and share the target lens shape data among the plurality of terminal devices (10).

2. The eyeglass lens processing system (1) according to claim 1, wherein
the data-sharing server (30) is adapted periodically communicate with the plurality of terminal devices (10), and
the data-sharing server (30) is adapted to receive new target lens shape data from one of the plurality of terminal devices (10) via the communication network, compare the received new target lens shape data with the target lens shape data already stored in the storage unit (32), updates the target lens shape data stored in the storage unit (32) according to the comparison result, and transfer the updated target lens shape data via the communication network to another terminal device (10) to synchronize the target lens shape data.

3. The eyeglass lens processing system (1) according to claim 1 or 2, wherein
each of the plurality of terminal devices (10) comprises an information acquisition unit (12, 13) for acquiring evaluation information adapted to evaluate fitting when the eyeglass lens processed by using the target lens shape data is fitted in the eyeglass frame, and
the data-sharing server (30) is adapted to share the evaluation information among the plurality of terminal devices (10) by receiving the evaluation information acquired by the information acquisition unit (12, 13) from one of the plurality of terminal devices (10) via the communication network and transferring the evaluation information to another terminal device (10) via the communication network.

4. The eyeglass lens processing system (1) according to claim 1 or 2, wherein
each of the plurality of terminal devices (10) comprises an information acquisition unit (12, 13) for acquiring processing conditions for processing the eyeglass lens by using the target lens shape data, and
the data-sharing server (30) is adapted to share the processing conditions among the plurality of terminal devices (10) by receiving the processing conditions acquired by the information acquisition unit (12, 113) from one of the plurality of terminal devices (10) via the communication network and transferring the processing conditions to another terminal device (10) via the communication network.

5. The eyeglass lens processing system (1) according to claim 1 or 2, wherein
each of the plurality of terminal devices (10) comprises an information acquisition unit (12, 13) for acquiring classification information classified by at least one of the color and shape of the eyeglass frame, and
the data-sharing server (30) is adapted to share the classification information among the plurality of terminal devices (10) by receiving the classification information acquired by the information acquisition unit (12, 13) from one of the plurality of terminal devices (10) via the communication network and transferring the classification information to another terminal device (10) via the communication network.

6. The eyeglass lens processing system (1) according to any one of claims 1 to 5, further comprising:
lens shape acquisition unit (501) for acquiring a target lens shape data of an eyeglass frame;
wherein each of the plurality of terminal devices (10) comprises:
image acquisition unit for acquiring an image data relating to the eyeglass frame; and
information processing unit (13, 31) for inserting the target lens shape data acquired by the lens shape acquisition unit (501) in the image data acquired by the image acquisition unit and storing the image data with the target lens shape data in a storage unit (32), the image data with the target lens shape data containing the target lens shape data.

7. The eyeglass lens processing system (1) according to claim 6, wherein the information processing unit (13, 31) is adapted to extract the target lens shape data from the image data with the target lens shape data, which is stored in the storage unit (32), and transmit the extracted target lens shape data to an eyeglass lens processing device for processing the eyeglass lens.

8. The eyeglass lens processing system (1) according to claim 6 or 7,
wherein each of the plurality of terminal devices (10) further comprises:
display control unit (13) for displaying the image data with the target lens shape data, which is stored in the storage unit (32), on a display unit (11), and
selection instruction receiving unit (12, 13) for receiving selection instruction to select at least one image data with the target lens shape data from the image data with the target lens shape data, which is displayed on the display unit (11) by the display control unit (13),
wherein the information processing unit (13, 31) is adapted to extract the target lens shape data from the image data with the target lens shape data, which is selected in the selection instruction received by the selection instruction receiving unit (12, 13).

9. The eyeglass lens processing system (1) according to any one of claims 6 to 8, wherein the information processing unit (13, 31) is adapted to insert processing conditions when processing the eyeglass lens by using the target lens shape data in the image data.

10. The eyeglass lens processing system (1) according to any one of claims 6 to 9,
wherein each of the plurality of terminal devices (10) further comprises evaluation information acquisition unit (12, 13) for acquiring evaluation information from a user with respect to the target lens shape data, and
wherein the information processing unit (12, 13) is adapted to insert the evaluation information of the target lens shape data acquired by the evaluation information acquisition unit (12, 13) in the image data.

11. The eyeglass lens processing system (1) according to any one of claims 1 to 5, further comprising:
an eyeglass frame shape measuring device (4) for measuring a lens shape of an eyeglass frame and acquiring a target lens shape data of the eyeglass frame;
an eyeglass lens processing device for processing the peripheral edge of the eyeglass lens,
wherein each of the plurality of terminal devices (10) further comprises:
an image acquisition unit for acquiring an image data relating to the eyeglass frame; and
an information processing unit (12, 13) for inserting the target lens shape data acquired by the eyeglass frame shape measuring device (4) in the image data acquired by the image acquisition unit and storing the image data containing the target lens shape data in a storage unit (32), and
wherein the information processing unit (13, 31) is adapted to extract the target lens shape data from the image data with the target lens shape data, which is stored in the storage unit (32), and transmit the extracted target lens shape data to the eyeglass lens processing device.

12. An eyeglass lens processing program used in an eyeglass lens processing system (1) for sharing a target lens shape data of an eyeglass frame, the eyeglass lens processing system (1) comprising a data-sharing server (30) capable of storing the target lens shape data of the eyeglass frame and a plurality of terminal devices (10) for transferring the target lens shape data to the data-sharing server (30),
**characterized in that** the program when executed by a processor of the eyeglass lens processing system (1) causes the eyeglass lens processing system (1) to execute a sharing step of sharing the target lens shape data among the plurality of terminal devices (10) by receiving the target lens shape data from one of the plurality of terminal devices (10) via a communication network and transferring the updated received target lens shape data to another terminal device (10).

13. The eyeglass lens processing program according to claim 12,
wherein the program when executed by the processor causing the eyeglass lens processing system (1) to execute:
a lens shape acquisition step of acquiring a target lens shape data of an eyeglass frame;
an image acquisition step of acquiring an image data relating to the eyeglass frame;
a storage step of inserting the target lens shape data acquired in the lens shape acquisition step in the image data acquired in the image acquisition step and storing the image data with the target lens shape data, which is the image data containing the target lens shape data, in a data server;
a display control step of receiving the image data with the target lens shape data from the data server and displaying the image data on a screen of the terminal device (10);
a transfer step of transferring the target lens shape data inserted in the image data displayed on a display unit (11) in the display control step to an eyeglass lens processing device; and
a processing step of processing the eyeglass lens with the eyeglass lens processing device by using the transferred target lens shape data.

## Patentansprüche

1. Brillenglasverarbeitungssystem (1) zum Teilen von Ziellinsenformdaten einer Brillenfassung, wobei das System Folgendes umfasst:
einen Datenteilungsserver (30), der eine Speichereinheit (32) zum Speichern der Ziellinsenformdaten enthält; und
mehrere Endgeräte (10) zum Übertragen der Ziellinsenformdaten an den Datenteilungsserver (30),
**dadurch gekennzeichnet, dass** der Datenteilungsserver (30) dafür ausgelegt ist, die Ziellinsenformdaten von einem der mehreren Endgeräte (10) über ein Kommunikationsnetz zu empfangen, und dafür ausgelegt ist, die empfangenen Ziellinsenformdaten an ein anderes Endgerät (10) zu übertragen, um die Ziellinsenformdaten zu aktualisieren und unter den mehreren Endgeräten (10) zu teilen.

2. Brillenglasverarbeitungssystem (1) nach Anspruch 1, wobei
der Datenteilungsserver (30) dafür ausgelegt ist, periodisch mit den mehreren Endgeräten (10) zu kommunizieren, und
der Datenteilungsserver (30) dafür ausgelegt ist, neue Ziellinsenformdaten von einem der mehreren Endgeräte (10) über das Kommunikationsnetz zu empfangen, die empfangenen neuen Ziellinsenformdaten mit den bereits in der Speichereinheit (32) gespeicherten Ziellinsenformdaten zu vergleichen, die in der Speichereinheit (32) gespeicherten Ziellinsenformdaten gemäß dem Vergleichsergebnis zu aktualisieren und die aktualisierten Ziellinsenformdaten über das Kommunikationsnetz an ein anderes Endgerät (10) zu übertragen, um die Ziellinsenformdaten zu synchronisieren.

3. Brillenglasverarbeitungssystem (1) nach Anspruch 1 oder 2, wobei
jedes der mehreren Endgeräte (10) eine Informationserfassungseinheit (12, 13) zum Erfassen von Bewertungsinformationen umfasst, die dafür ausgelegt sind, die Anpassung zu bewerten, wenn das unter Verwendung der Ziellinsenformdaten verarbeitete Brillenglas in die Brillenfassung eingepasst wird, und
der Datenteilungsserver (30) dafür ausgelegt ist, die Bewertungsinformationen unter den mehreren Endgeräten (10) zu teilen, indem er die von der Informationserfassungseinheit (12, 13) erfassten Bewertungsinformationen von einem der mehreren Endgeräte (10) über das Kommunikationsnetz empfängt und die Bewertungsinformationen über das Kommunikationsnetz an ein anderes Endgerät (10) überträgt.

4. Brillenglasverarbeitungssystem (1) nach Anspruch 1 oder 2, wobei
jedes der mehreren Endgeräte (10) eine Informationserfassungseinheit (12, 13) zum Erfassen von Verarbeitungsbedingungen zum Verarbeiten des Brillenglases unter Verwendung der Ziellinsenformdaten umfasst, und
der Datenteilungsserver (30) dafür ausgelegt ist, die Verarbeitungsbedingungen unter den mehreren Endgeräten (10) zu teilen, indem er die von der Informationserfassungseinheit (12, 113) erfassten Verarbeitungsbedingungen von einem der mehreren Endgeräte (10) über das Kommunikationsnetz empfängt und die Verarbeitungsbedingungen über das Kommunikationsnetz an ein anderes Endgerät (10) überträgt.

5. Brillenglasverarbeitungssystem (1) nach Anspruch 1 oder 2, wobei
jedes der mehreren Endgeräte (10) eine Informationserfassungseinheit (12, 13) zum Erfassen von Klassifizierungsinformationen umfasst, die durch die Farbe und/oder die Form der Brillenfassung klassifiziert sind, und
der Datenteilungsserver (30) dafür ausgelegt ist, die Klassifizierungsinformationen unter den mehreren Endgeräten (10) zu teilen, indem er die von der Informationserfassungseinheit (12, 13) erfassten Klassifizierungsinformationen von einem der mehreren Endgeräte (10) über das Kommunikationsnetz empfängt und die Klassifizierungsinformationen über das Kommunikationsnetz an ein anderes Endgerät (10) überträgt.

6. Brillenglasverarbeitungssystem (1) nach einem der Ansprüche 1 bis 5, das ferner Folgendes umfasst:
eine Linsenformerfassungseinheit (501) zum Erfassen von Ziellinsenformdaten einer Brillenfassung;
wobei jedes der mehreren Endgeräte (10) Folgendes umfasst:
eine Bilderfassungseinheit zum Erfassen von Bilddaten, die sich auf die Brillenfassung beziehen; und
eine Informationsverarbeitungseinheit (13, 31) zum Einfügen der durch die Linsenformerfassungseinheit (501) erfassten Ziellinsenformdaten in die durch die Bilderfassungseinheit erfassten Bilddaten und zum Speichern der Bilddaten mit den Ziellinsenformdaten in einer Speichereinheit (32), wobei die Bilddaten mit den Ziellinsenformdaten die Ziellinsenformdaten enthalten.

7. Brillenglasverarbeitungssystem (1) nach Anspruch 6, wobei die Informationsverarbeitungseinheit (13, 31) dazu ausgelegt ist, die Ziellinsenformdaten aus den Bilddaten mit den Ziellinsenformdaten, die in der Speichereinheit (32) gespeichert sind, zu extrahieren und die extrahierten Ziellinsenformdaten an eine Brillenglasverarbeitungsvorrichtung zum Verarbeiten des Brillenglases zu übertragen.

8. Brillenglasverarbeitungssystem (1) nach Anspruch 6 oder 7,
wobei jedes der mehreren Endgeräte (10) ferner Folgendes umfasst:
eine Anzeigesteuereinheit (13) zum Anzeigen der Bilddaten mit den Ziellinsenformdaten, die in der Speichereinheit (32) gespeichert sind, auf einer Anzeigeeinheit (11), und
eine Auswahlanweisungsempfangseinheit (12, 13) zum Empfangen einer Auswahlanweisung zum Auswählen von mindestens einem Bilddaten mit den Ziellinsenformdaten aus den Bilddaten mit den Ziellinsenformdaten, die auf der Anzeigeeinheit (11) durch die Anzeigesteuereinheit (13) angezeigt werden,
wobei die Informationsverarbeitungseinheit (13, 31) dazu ausgelegt ist, die Ziellinsenformdaten aus den Bilddaten mit den Ziellinsenformdaten, die in der durch die Auswahlanweisungsempfangseinheit (12, 13) empfangenen Auswahlanweisung ausgewählt werden, zu extrahieren.

9. Brillenglasverarbeitungssystem (1) nach einem der Ansprüche 6 bis 8, wobei die Informationsverarbeitungseinheit (13, 31) dazu ausgelegt ist, Verarbeitungsbedingungen beim Verarbeiten des Brillenglases unter Verwendung der Ziellinsenformdaten in die Bilddaten einzufügen.

10. Brillenglasverarbeitungssystem (1) nach einem der Ansprüche 6 bis 9,
wobei jedes der mehreren Endgeräte (10) ferner eine Bewertungsinformationserfassungseinheit (12, 13) zum Erfassen von Bewertungsinformationen von einem Benutzer in Bezug auf die Ziellinsenformdaten umfasst, und
wobei die Informationsverarbeitungseinheit (12, 13) dazu ausgelegt ist, die Bewertungsinformationen der durch die Bewertungsinformationserfassungseinheit (12, 13) erfassten Ziellinsenformdaten in die Bilddaten einzufügen.

11. Brillenglasverarbeitungssystem (1) nach einem der Ansprüche 1 bis 5, das ferner Folgendes umfasst:
eine Brillenfassungsformmessvorrichtung (4) zum Messen einer Linsenform einer Brillenfassung und Erfassen von Ziellinsenformdaten der Brillenfassung;
eine Brillenglasverarbeitungsvorrichtung zum Verarbeiten des Umfangsrands des Brillenglases,
wobei jedes der mehreren Endgeräte (10) ferner Folgendes umfasst:
eine Bilderfassungseinheit zum Erfassen von Bilddaten, die sich auf die Brillenfassung beziehen; und
eine Informationsverarbeitungseinheit (12, 13) zum Einfügen der durch die Brillenfassungsformmessvorrichtung (4) erfassten Ziellinsenformdaten in die durch die Bilderfassungseinheit erfassten Bilddaten und zum Speichern der Bilddaten, die die Ziellinsenformdaten enthalten, in einer Speichereinheit (32), und
wobei die Informationsverarbeitungseinheit (13, 31) dazu ausgelegt ist, die Ziellinsenformdaten aus den Bilddaten mit den Ziellinsenformdaten, die in der Speichereinheit (32) gespeichert sind, zu extrahieren und die extrahierten Ziellinsenformdaten an die Brillenglasverarbeitungsvorrichtung zu übertragen.

12. Brillenglasverarbeitungsprogramm, das in einem Brillenglasverarbeitungssystem (1) zum Teilen von Ziellinsenformdaten einer Brillenfassung verwendet wird, wobei das Brillenglasverarbeitungssystem (1) einen Datenteilungsserver (30), der die Ziellinsenformdaten der Brillenfassung speichern kann, und mehrere Endgeräte (10) zum Übertragen der Ziellinsenformdaten an den Datenteilungsserver (30) umfasst,
**dadurch gekennzeichnet, dass** das Programm, wenn es von einem Prozessor des Brillenglasverarbeitungssystems (1) ausgeführt wird, bewirkt, dass das Brillenglasverarbeitungssystem (1) einen Teilungsschritt zum Teilen der Ziellinsenformdaten unter den mehreren Endgeräten (10) ausführt, indem es die Ziellinsenformdaten von einem der mehreren Endgeräte (10) über ein Kommunikationsnetz empfängt und die aktualisierten empfangenen Ziellinsenformdaten an ein anderes Endgerät (10) überträgt.

13. Brillenglasverarbeitungsprogramm nach Anspruch 12,
wobei das Programm, wenn es von dem Prozessor ausgeführt wird, bewirkt, dass das Brillenglasverarbeitungssystem (1) ausführt:
einen Linsenformerfassungsschritt zum Erfassen von Ziellinsenformdaten einer Brillenfassung;
einen Bilderfassungsschritt zum Erfassen von Bilddaten, die sich auf die Brillenfassung beziehen;
einen Speicherschritt zum Einfügen der in dem Linsenformerfassungsschritt erfassten Ziellinsenformdaten in die in dem Bilderfassungsschritt erfassten Bilddaten und zum Speichern der Bilddaten mit den Ziellinsenformdaten, bei denen es sich um die Bilddaten handelt, die die Ziellinsenformdaten enthalten, in einem Datenserver;
einen Anzeigesteuerschritt zum Empfangen der Bilddaten mit den Ziellinsenformdaten von dem Datenserver und zum Anzeigen der Bilddaten auf einem Bildschirm des Endgeräts (10);
einen Übertragungsschritt zum Übertragen der in die Bilddaten, die auf einer Anzeigeeinheit (11) in dem Anzeigesteuerschritt angezeigt werden, eingefügten Ziellinsenformdaten an eine Brillenglasverarbeitungsvorrichtung; und
einen Verarbeitungsschritt zum Verarbeiten des Brillenglases mit der Brillenglasverarbeitungsvorrichtung unter Verwendung der übertragenen Ziellinsenformdaten.

## Revendications

1. Système de traitement de verre de lunettes (1) pour partager des données de forme de verre cible d'une monture de lunettes, le système comprenant :
un serveur de partage de données (30) comprenant une unité de stockage (32) pour stocker les données de forme de verre cible ; et
une pluralité de dispositifs terminaux (10) pour transférer les données de forme de verre cible au serveur de partage de données (30),
**caractérisé en ce que** le serveur de partage de données (30) est adapté pour recevoir les données de forme de verre cible de l'un de la pluralité de dispositifs terminaux (10) via un réseau de communication et est adapté pour transférer les données de forme de verre cible reçues à un autre dispositif terminal (10) pour mettre à jour et partager les données de forme de verre cible parmi la pluralité de dispositifs terminaux (10).

2. Système de traitement de verre de lunettes (1) selon la revendication 1, dans lequel
le serveur de partage de données (30) est adapté pour communiquer périodiquement avec la pluralité de dispositifs terminaux (10), et
le serveur de partage de données (30) est adapté pour recevoir de nouvelles données de forme de verre cible de l'un de la pluralité de dispositifs terminaux (10) via le réseau de communication, comparer les nouvelles données de forme de verre cible reçues aux données de forme de verre cible déjà stockées dans l'unité de stockage (32), mettre à jour les données de forme de verre cible stockées dans l'unité de stockage (32) selon le résultat de comparaison, et transférer les données de forme de verre cible mises à jour via le réseau de communication à un autre dispositif terminal (10) pour synchroniser les données de forme de verre cible.

3. Système de traitement de verre de lunettes (1) selon la revendication 1 ou 2, dans lequel
chacun de la pluralité de dispositifs terminaux (10) comprend une unité d'acquisition d'informations (12, 13) pour acquérir des informations d'évaluation adaptées pour évaluer un ajustement lorsque le verre de lunettes traité en utilisant les données de forme de verre cible est ajusté dans la monture de lunettes, et
le serveur de partage de données (30) est adapté pour partager les informations d'évaluation parmi la pluralité de dispositifs terminaux (10) en recevant les informations d'évaluation acquises par l'unité d'acquisition d'informations (12, 13) de l'un de la pluralité de dispositifs terminaux (10) via le réseau de communication et en transférant les informations d'évaluation à un autre dispositif terminal (10) via le réseau de communication.

4. Système de traitement de verre de lunettes (1) selon la revendication 1 ou 2, dans lequel
chacun de la pluralité de dispositifs terminaux (10) comprend une unité d'acquisition d'informations (12, 13) pour acquérir des conditions de traitement pour traiter le verre de lunettes en utilisant les données de forme de verre cible, et
le serveur de partage de données (30) est adapté pour partager les conditions de traitement parmi la pluralité de dispositifs terminaux (10) en recevant les conditions de traitement acquises par l'unité d'acquisition d'informations (12, 113) de l'un de la pluralité de dispositifs terminaux (10) via le réseau de communication et en transférant les conditions de traitement à un autre dispositif terminal (10) via le réseau de communication.

5. Système de traitement de verre de lunettes (1) selon la revendication 1 ou 2, dans lequel
chacun de la pluralité de dispositifs terminaux (10) comprend une unité d'acquisition d'informations (12, 13) pour acquérir des informations de classification classées par au moins l'une de la couleur et de la forme de la monture de lunettes, et
le serveur de partage de données (30) est adapté pour partager les informations de classification parmi la pluralité de dispositifs terminaux (10) en recevant les informations de classification acquises par l'unité d'acquisition d'informations (12, 13) de l'un de la pluralité de dispositifs terminaux (10) via le réseau de communication et en transférant les informations de classification à un autre dispositif terminal (10) via le réseau de communication.

6. Système de traitement de verre de lunettes (1) selon l'une quelconque des revendications 1 à 5, comprenant en outre :
une unité d'acquisition de forme de verre (501) pour acquérir des données de forme de verre cible d'une monture de lunettes ;
dans lequel chacun de la pluralité de dispositifs terminaux (10) comprend :
une unité d'acquisition d'image pour acquérir des données d'image relatives à la monture de lunettes ; et
une unité de traitement d'informations (13, 31) pour insérer les données de forme de verre cible acquises par l'unité d'acquisition de forme de verre (501) dans les données d'image acquises par l'unité d'acquisition d'image et stocker les données d'image avec les données de forme de verre cible dans une unité de stockage (32), les données d'image avec les données de forme de verre cible contenant les données de forme de verre cible.

7. Système de traitement de verre de lunettes (1) selon la revendication 6, dans lequel l'unité de traitement d'informations (13, 31) est adaptée pour extraire les données de forme de verre cible des données d'image avec les données de forme de verre cible, qui sont stockées dans l'unité de stockage (32), et transmettre les données de forme de verre cible extraites à un dispositif de traitement de verre de lunettes pour traiter le verre de lunettes.

8. Système de traitement de verre de lunettes (1) selon la revendication 6 ou 7,
dans lequel chacun de la pluralité de dispositifs terminaux (10) comprend en outre :
une unité de commande d'affichage (13) pour afficher les données d'image avec les données de forme de verre cible, qui sont stockées dans l'unité de stockage (32), sur une unité d'affichage (11), et
une unité de réception d'instruction de sélection (12, 13) pour recevoir une instruction de sélection pour sélectionner au moins une donnée d'image avec les données de forme de verre cible parmi les données d'image avec les données de forme de verre cible, qui sont affichées sur l'unité d'affichage (11) par l'unité de commande d'affichage (13),
dans lequel l'unité de traitement d'informations (13, 31) est adaptée pour extraire les données de forme de verre cible des données d'image avec les données de forme de verre cible, qui sont sélectionnées dans l'instruction de sélection reçue par l'unité de réception d'instruction de sélection (12, 13).

9. Système de traitement de verre de lunettes (1) selon l'une quelconque des revendications 6 à 8, dans lequel l'unité de traitement d'informations (13, 31) est adaptée pour insérer des conditions de traitement lors du traitement du verre de lunettes en utilisant les données de forme de verre cible dans les données d'image.

10. Système de traitement de verre de lunettes (1) selon l'une quelconque des revendications 6 à 9,
dans lequel chacun de la pluralité de dispositifs terminaux (10) comprend en outre une unité d'acquisition d'informations d'évaluation (12, 13) pour acquérir des informations d'évaluation d'un utilisateur par rapport aux données de forme de verre cible, et
dans lequel l'unité de traitement d'informations (12, 13) est adaptée pour insérer les informations d'évaluation des données de forme de verre cible acquises par l'unité d'acquisition d'informations d'évaluation (12, 13) dans les données d'image.

11. Système de traitement de verre de lunettes (1) selon l'une quelconque des revendications 1 à 5, comprenant en outre :
un dispositif de mesure de forme de monture de lunettes (4) pour mesurer une forme de verre d'une monture de lunettes et acquérir des données de forme de verre cible de la monture de lunettes ;
un dispositif de traitement de verre de lunettes pour traiter le bord périphérique du verre de lunettes,
dans lequel chacun de la pluralité de dispositifs terminaux (10) comprend en outre :
une unité d'acquisition d'image pour acquérir des données d'image relatives à la monture de lunettes ; et
une unité de traitement d'informations (12, 13) pour insérer les données de forme de verre cible acquises par le dispositif de mesure de forme de monture de lunettes (4) dans les données d'image acquises par l'unité d'acquisition d'image et stocker les données d'image contenant les données de forme de verre cible dans une unité de stockage (32), et
dans lequel l'unité de traitement d'informations (13, 31) est adaptée pour extraire les données de forme de verre cible des données d'image avec les données de forme de verre cible, qui sont stockées dans l'unité de stockage (32), et transmettre les données de forme de verre cible extraites au dispositif de traitement de verre de lunettes.

12. Programme de traitement de verre de lunettes utilisé dans un système de traitement de verre de lunettes (1) pour partager des données de forme de verre cible d'une monture de lunettes, le système de traitement de verre de lunettes (1) comprenant un serveur de partage de données (30) capable de stocker les données de forme de verre cible de la monture de lunettes et une pluralité de dispositifs terminaux (10) pour transférer les données de forme de verre cible au serveur de partage de données (30),
**caractérisé en ce que** le programme, lorsqu'il est exécuté par un processeur du système de traitement de verre de lunettes (1), amène le système de traitement de verre de lunettes (1) à exécuter une étape de partage consistant à partager les données de forme de verre cible parmi la pluralité de dispositifs terminaux (10) en recevant les données de forme de verre cible de l'un de la pluralité de dispositifs terminaux (10) via un réseau de communication et en transférant les données de forme de verre cible reçues mises à jour à un autre dispositif terminal (10).

13. Programme de traitement de verre de lunettes selon la revendication 12,
dans lequel le programme, lorsqu'il est exécuté par le processeur, amène le système de traitement de verre de lunettes (1) à exécuter :
une étape d'acquisition de forme de verre pour acquérir des données de forme de verre cible d'une monture de lunettes ;
une étape d'acquisition d'image pour acquérir des données d'image relatives à la monture de lunettes ;
une étape de stockage pour insérer les données de forme de verre cible acquises à l'étape d'acquisition de forme de verre dans les données d'image acquises à l'étape d'acquisition d'image et stocker les données d'image avec les données de forme de verre cible, qui sont les données d'image contenant les données de forme de verre cible, dans un serveur de données ;
une étape de commande d'affichage pour recevoir les données d'image avec les données de forme de verre cible du serveur de données et afficher les données d'image sur un écran du dispositif terminal (10) ;
une étape de transfert pour transférer les données de forme de verre cible insérées dans les données d'image affichées sur une unité d'affichage (11) à l'étape de commande d'affichage à un dispositif de traitement de verre de lunettes ; et
une étape de traitement pour traiter le verre de lunettes avec le dispositif de traitement de verre de lunettes en utilisant les données de forme de verre cible transférées.
